# EUROPÄISCHE PATENTSCHRIFT

(11) **EP 0 996 593 B1**
(45) Veröffentlichungstag und Bekanntmachung des Hinweises auf die Patenterteilung: **08.08.2001**
(21) Anmeldenummer: 98922589.1
(22) Anmeldetag: 12.03.1998
(51) Int. Cl.: C02F 1/24, C02F 1/78, C02F 1/465

(54) **VERFAHREN ZUM ENTFERNEN VON BIOMASSE AUS EINER FLÜSSIGKEIT MIT HILFE EINES REAKTORS**
METHOD FOR REMOVING BIOMASS FROM A LIQUID BY MEANS OF A REACTOR
PROCEDE D'ELIMINATION DE LA BIOMASSE DANS UN LIQUIDE A L'AIDE D'UN REACTEUR

(30) Priorität: 10.05.1997 DE 19719798
(43) Veröffentlichungstag der Anmeldung: 03.05.2000
(73) Patentinhaber: FORSCHUNGSZENTRUM JÜLICH GMBH, 52425 Jülich (DE)
(72) Erfinder: OVERATH, Horst, D-52428 Jülich (DE)
(74) Vertreter: Hublé, Jörn R.
(86) Internationale Anmeldenummer: DE9800732
(87) Internationale Veröffentlichungsnummer: WO9851618

(56) Entgegenhaltungen:
- EP-A- 0 082 809
- EP-A- 0 274 083
- DE-A- 4 432 042
- US-A- 5 382 358

## Beschreibung

Die vorliegende Erfindung betrifft ein Verfahren zum Entfernen von Biomasse aus einer Flüssigkeit mit Hilfe eines Reaktors gemäß dem Oberbegriff des Patentanspruchs 1.

Ein derartiges Verfahren ist aus der EP 0 274 083 A1 bekannt.

Flüssigkeiten, die mit Biomasse, also mit den Zellen von Bakterien, Algen, Hefen und anderen Mikroben, mit Proteinen und dergleichen belastet sind, entstehen beispielsweise bei der Nitrat- und Nitrit-Reduktion von Wasser mit Hilfe von bakterieller Denitrifikation, das bei der Tierhaltung im Süß- und Meerwasserbereich oder bei der Abwasseraufbereitung in Kläranlagen anfällt. Auch das Kompostabwasser, das beim biologischen Abbau von Abfällen entsteht, ist meist mit Biomasse belastet, genau wie das Getränkeabwasser von Brauereien. Die Biomasse stellt in der Regel eine Qualitätsminderung und ein wasserbelastendes, oft auch gesundheitsgefährdendes Potential dar und muß daher aus der Flüssigkeit entfernt werden.

Eine bekannte Möglichkeit, Biomasse aus Flüssigkeiten abzutrennen, besteht darin, daß der Biomasse enthaltenden Flüssigkeit, im folgenden Arbeitsflüssigkeit genannt, ein Flockungsmittel zugesetzt wird. Flockungsmittel bewirken, daß die in der Arbeitsflüssigkeit enthaltenen Biomasse- und sonstigen Partikeln zu Flocken aggregieren. Die Flocken verbleiben dann schwebend in der Flüssigkeit oder sedimentieren und werden dann, beispielsweise durch Schwimmaufbereitung, die auch als Flotation bezeichnet wird, von der flüssigen Phase getrennt. Zu diesem Zweck werden in der Arbeitsflüssigkeit, die kontinuierlich in einen Flotationsreaktor geleitet wird, Gasblasen erzeugt, an die sich die Flocken anlagern, an die Flüssigkeitsoberfläche aufsteigen und dort eine Schlammdecke bilden. Von dort wird der Schlamm mit Hilfe von Räumwischern entfernt. Für die Flotation sind bekannte Reaktoren geeignet, wie zum Beispiel der Airlift-Reaktor, der Blasensäulenreaktor oder der Deep-Shaft-Reaktor.

Ein Nachteil der Flockungsmittel besteht darin, daß sie Chemikalien sind, die die Arbeitsflüssigkeit belasten. So ist beispielsweise Polyaluminiumhydroxid ein gängiges Flockungsmittel, das jedoch besonders in Meerwasser, dessen pH-Wert zwischen 8 und 8,4 liegt, Al³⁺-Ionen abgibt. Aluminium kann aber bei Lebewesen, die dem aufbereiteten Meerwasser ausgesetzt werden, wichtige enzymatische Stoffwechselvorgänge blockieren.

Eine Alternative oder Ergänzung zu dem Einsatz von Flockungsmitteln ist die Elektroflotation, bei der in dem Reaktor ein elektrisches Feld erzeugt wird, in dem die Flocken separiert werden.

Jedoch ist die Elektroflotation sehr aufwendig, da für die Erzeugung des elektrischen Feldes viel Energie benötigt wird.

Eine weitere Möglichkeit besteht darin, die Biomasse durch Filtration zu entfernen. Dabei wird die Arbeitsflüssigkeit durch Membranen gedrückt, auf denen die Partikel zurückgehalten werden.

Es kann allerdings zu unerwünschten Verstopfungen der Membranen kommen, so daß regelmäßiges Rückspülen mit Frischwasser erforderlich ist. Hierfür wird zum einen zusätzliche Energie für den Pumpenbetrieb und zum anderen die wertvolle Ressource Wasser verbraucht.

Aus der DE 44 32 042 ist ein Flotationsreaktor bekannt, der ohne den Einsatz von Flockungsmitteln auskommt. Bei diesem Flotationsreaktor wird die Arbeitsflüssigkeit zusammen mit einem Luft-Ozon-Gemisch in einen Einleitungsraum gepumpt, das sich feinstblasig mit der Arbeitsflüssigkeit vermischt. In der Arbeitsflüssigkeit enthaltene Verunreinigungen wie Feststoffe, Proteine und Biomasse lagern sich an die Bläschen an. Diese steigen in einem Steigrohr, das sich oben an den Einleitungsraum anschließt, aufwärts, bis sie in ein Schaumrohr gelangen, das mit seinem unteren Teil das Steigrohr in Abstand umgibt. Die mit den Verunreinigungen belagerten Bläschen bauen sich in dem über das Steigrohr hinausgehenden oberen Teil des Schaumrohrs zu einer Schaumsäule auf, die durch nachfolgende Bläschen oben aus dem Schaumrohr herausgedrückt und dann aufgefangen wird.

Mit diesem Flotationsreaktor können die Feststoffe und Proteine weitgehend entfernt werden, von der Biomasse werden aber nur die an Feststoffen und Proteinen angelagerten Zellen entfernt. Die frei in der Arbeitsflüssigkeit suspendierten Zellen hingegen werden zwar bis zu einem gewissen Grad abgetötet, sie selbst und auch ihre abgetöteten Überreste sind aber bisher mit diesem Flotationsreaktor nicht flotierbar.

Aus der EP 0 274 083 A1 ist ein Verfahren zum Entfernen von Biomasse aus einer Flüssigkeit mit Hilfe eines Flotationsreaktors bekannt, der dem aus der DE 44 32 042 bekannten Flotationsreaktor weitgehend gleicht. Dieses bekannte Verfahren ist insbesondere als Nachbehandlung für denitrifiziertes Abwasser aus Meerwasseraquarien geeignet, das soweit mit Sauerstoff beladen und von Biomasse sowie Nitrit befreit wird, daß es erneut in das Aquarium eingeleitet werden kann.

Bei diesem Verfahren wird die von einer Denitrifikation herkommende Flüssigkeit in einen Einleitungsraum des Reaktorbehälters eingeleitet. Über Gasverteiler wird ein Luft-Ozon-Gemisch feinstblasig in die Flüssigkeit in dem Einleitungsraum zugeführt. Der Ozonanteil wird dabei so gesteuert, daß noch keine Denaturierung von vorhandenem Eiweiß auftritt. Ein Teil der durch Flotation gereinigten Flüssigkeit wird wieder in den Einleitungsraum zurückgeführt. Diese Rückführung dient zum einen der möglichst effektiven Aufsättigung der Flüssigkeit mit Sauerstoff, wodurch eine Anhebung des Redoxpotentials von -200 mV auf +200 bis +230 mV erreicht werden kann. Bei diesem Betriebswert wird im Zulaufwasser enthaltenes Nitrit zu Nitrat aufoxidiert. Die Rückführung bewirkt zum anderen eine Verringerung des Restes an eiweißhaltigen Substanzen, die noch im Ablauf enthalten sind (Biomasseschlupf).

Es ist daher Aufgabe der Erfindung, das zu Beginn erwähnte bekannte Verfahren zum Entfernen von Biomasse aus Flüssigkeiten dahingehend zu verbessern, daß die in der Arbeitsflüssigkeit vorhandene Biomasse möglichst vollständig entfernt wird und dabei der Einsatz von belastenden Chemikalien, wie Flokkungsmitteln, sowie Energie und Wasser gleich gering bleibt.

Diese Aufgabe wird durch ein Verfahren zum Entfernen von Biomasse aus Flüssigkeiten gemäß dem Patentanspruch 1 gelöst.

Gemäß der Erfindung ist somit vorgesehen, daß:
- eine Vorlaufflüssigkeit in den Reaktor geleitet wird, die einen geringeren Gehalt an Biomasse aufweist als die Arbeitsflüssigkeit;
- in der Vorlaufflüssigkeit zumindest in einem örtlich begrenzten Bereich ein Redoxpotential eingestellt wird, das einen bestimmien Vorlaufwert nicht unterschreitet; und
- die Arbeitsflüssigkeit nach dem Einstellen des Redoxpotentials zu der Vorlaufflüssigkeit in den Reaktor geleitet wird,
wobei:
- der Vorlaufwert mindestens so hoch wie der Betriebswert ist;
- der Betriebswert so hoch ist, daß Zellen von Bakterien, Algen oder dergleichen, die in der Arbeitsflüssigkeit enthalten sind, derart geschädigt werden, daß sie flotierbar sind; und
- das Redoxpotential durch Zufuhr von Ozon eingestellt wird.

Dem erfindungsgemäßen Verfahren liegen folgende Überlegungen und Erkenntnisse zugrunde.

Der aus der DE 44 32 042 bekannte Flotationsreaktor wurde bisher im kontinuierlichen Betrieb derart gefahren, daß die Arbeitsflüssigkeit zusammen mit dem Luft-Ozon-Gemisch schon zu Beginn in den leeren Reaktorbehälter geleitet wird.

Versuche des Erfinders der vorliegenden Erfindung haben jedoch gezeigt, daß zum einen zwar viele, aber bei weitem nicht alle Mikroben abgetötet werden und zum anderen die Zellstruktur der abgetöteten Mikroben weitgehend unbeschädigt ist. Messungen an der Arbeitsflüssigkeit im Reaktorbehälter haben dabei ergeben, daß das Redoxpotential unter +300 mV lag. Dieser Wert läßt sich auch nicht durch eine Erhöhung des Ozoneintrags vergrößern. Als mögliche Ursache hierfür wurde gefunden, daß das Ozon sehr schnell an den Biomasse-Partikeln katalytisch zerstört und damit unwirksam gemacht wird.

Mit Hilfe der Vorlaufflüssigkeit kann das Redoxpotential, beispielsweise durch eine entsprechend hohe Ozonzufuhr, auf einen gewünschten Vorlaufwert voreingestellt werden. Dabei läßt sich, beispielsweise durch eine Erhöhung der Ozonzufuhr, ein um so höheres Redoxpotential erreichen, je geringer der Gehalt an Biomasse ist.

Es ist das Ziel dieser Maßnahme, einen Vorlaufwert zu erreichen, der so groß ist, daß in der nachfolgend eingeleiteten Arbeitsflüssigkeit, die einen größeren Gehalt an Biomasse als die Vorlaufflüssigkeit hat, ein ausreichend hohes Redoxpotential, beispielsweise durch Ozonzufuhr, aufrechterhalten werden kann, um die Zellen der Mikroben so stark zu schädigen, daß auch die frei in der Flüssigkeit suspendierten Zellen flotierbar sind.

Dies ist beispielsweise der Fall, wenn die Zellwände so stark geschädigt werden, daß das Zellplasma in die Arbeitsflüssigkeit austritt. Das ausgetretene Zellplasma ermöglicht die Flotation der abgetöteten Mikroben ohne den Einsatz von Flockungsmitteln elektrischen Feldern oder Filtern. Der apparative Aufwand ist zudem gering, da sich die für dieses Verfahren benötigten Einrichtungen leicht in bestehende Anlagen integrieren lassen.

Da der Vorlaufwert mindestens so hoch wie der Betriebswert ist, kann ein mit dem Einleiten der Arbeitsflüssigkeit verbundenes unerwünscht starkes Absinken des Redoxpotentials vermieden werden.

Vorteilhafte Weiterbildungen sind in den Unteransprüchen beschrieben.

Vorzugsweise ist bereits der Vorlaufwert so hoch, daß Zellen von Bakterien, Algen oder dergleichen, die in der Arbeitsflüssigkeit enthalten sein werden, derart geschädigt werden, daß das Zellplasma austritt.

Es lassen sich gute Flotationsergebnisse erzielen, wenn in der Vorlaufflüssigkeit und/oder in der Flüssigkeit ein Redoxpotential von mindestens +650 mV herrscht. Besonders gute Ergebnisse werden jedoch erzielt, wenn das Redoxpotential zwischen +750 und +850 mV liegt.

Die Zufuhr von Ozon kann erfolgen, bevor die Flüssigkeit in den Reaktorbehälter geleitet wird, und/oder im Reaktorbehälter selbst.

Wenn die Arbeitsflüssigkeit stark mit Biomasse belastet ist, kann es sein, daß die Flüssigkeit nach einem Durchlauf durch den Reaktorbehälter noch nicht ausreichend gereinigt ist. Es kann dann sinnvoll sein, einen Teil der teilweise gereinigten Flüssigkeit in den Reaktorbehälter zurückzuführen, da so die Biomasse einer höheren Verweilzeit im Reaktorbehälter ausgesetzt ist, so daß sie dem hohen Redoxpotential länger unterliegt als bei einer linearen Beschickung. Dann kann auch eine Ozonzufuhr in die zurückgeführte Flüssigkeit erfolgen.

Der örtlich begrenzte Bereich liegt bevorzugt im Einleitungsbereich der Flüssigkeit in den Reaktorbehälter.

Die Flotation kann durch Flockungsmittel, die der Arbeitsflüssigkeit zugesetzt werden, und/oder durch ein elektrische Feld unterstützt werden, das in dem Reaktorbehälter erzeugt wird.

Die Zugabe von die Oberflächenspannung verringernden Substanzen ist insbesondere dann sinnvoll, wenn die Oberflächenspannung der Arbeitsflüssigkeit zu sehr ansteigt. Eine höhere Oberflächenspannung führt nämlich zur Bildung von größeren Blasen in der Arbeitsflüssigkeit, die sich zu noch größeren Blasen vereinigen, die dann die Schaumsäule zerschlagen. Eine Erhöhung der Oberflächenspannung kann beispielsweise durch Vitamin E bewirkt werden, das sich zum Teil im Wasser auflöst, wenn es in Wasser gehaltenen Tieren wie Fischen, Delphinen oder Robben zugefüttert wird, oder durch das Fett, das Robben über ihre Haut ausscheiden. Geeignete Substanzen sind neben Flockungsmitteln und Schaumbildnern auch Polyvinylpyrrolidone.

Vorteilhafterweise wird die gereinigte Flüssigkeit nach dem Ablauf aus dem Reaktorbehälter durch einen Aktivkohlefilter geleitet, um das darin verbliebene Ozon zu beseitigen.

Im folgenden wird die Erfindung anhand eines in den beigefügten Zeichnungen dargestellten Ausführungsbeispiels näher beschrieben.
- FIG. 1: ist eine geschnittene Seitenansicht eines Flotationsreaktors, der das erfindungsgemäße Verfahren zum Entfernen von Biomasse aus Flüssigkeiten umsetzt; und
- FIG. 2: ist ein Schnitt längs der Linie II-II von FIG. 1.

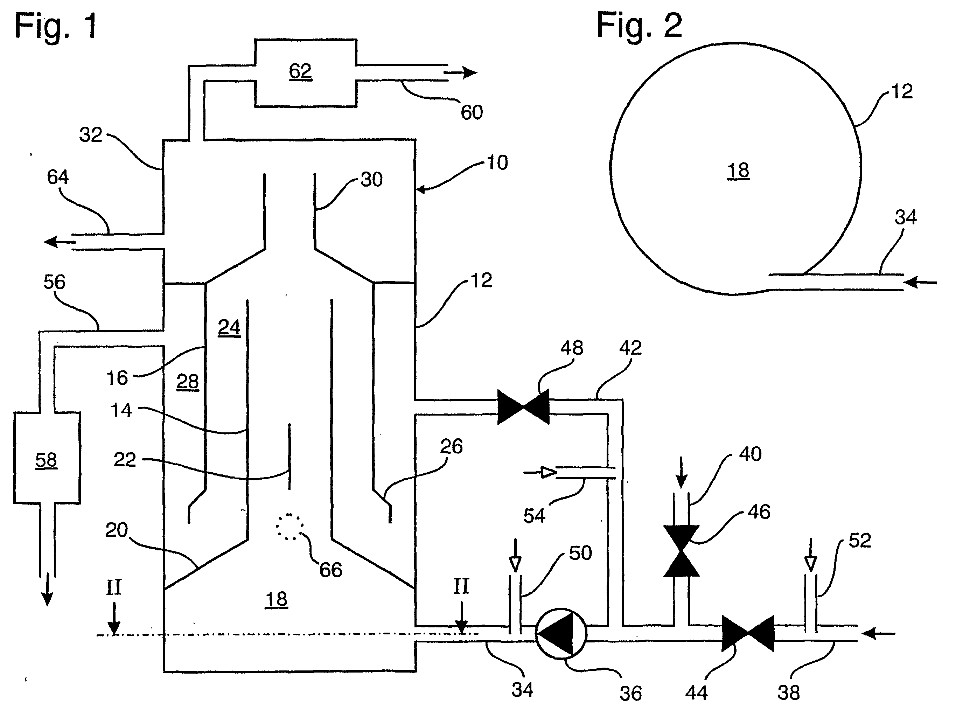

Gemäß FIG. 1 weist ein Flotationsreaktor einen Reaktorbehälter 10 mit einem im wesentlichen zylindrischen, aufrecht stehenden Außenrohr 12 auf, das unten durch einen Boden verschlossen ist und in dessen Inneren ein Steigrohr 14 und ein Trennrohr 16 koaxial und mit Abstand zueinander angeordnet sind. Im unteren Teil des Außenrohrs 12 ist ein Reaktionsraum 18 mittels einer kegelstumpfförmigen Trennwand 20 gebildet, die mit ihrem Außenrand an dem Außenrohr 12 in Abstand zum Behälterboden und mit dem ihre zentrale Öffnung begrenzenden Rand am unteren Ende des Steigrohrs 14 befestigt ist. Das Steigrohr 14 wird oberhalb seines unteren Endes durch eine senkrechte Zwischenwand 22 in zwei Hälften unterteilt, die jeweils einen D- oder halbmondförmigen Querschnitt aufweisen.

Das Trennrohr 16 greift mit seinem unteren Teil über das Steigrohr 14, so daß zwischen ihnen ein Innenkanal 24 mit ringförmigem Querschnitt gebildet wird, der unten offen ist, da das untere Ende des Trennrohrs 16 in Abstand zu der Oberseite der Trennwand 20 liegt. Der untere Teil des Trennrohrs 16 erweitert sich zu einem Entspannungskonus 26, so daß die Querschnittsfläche des Innenkanals 24 und damit der Strömungsquerschnitt ansteigt. Dort geht der Innenkanal 24 in einen Außenkanal 28 mit ebenfalls ringförmigem Querschnitt über, der zwischen dem unteren Teil des Trennrohrs 16 und dem Außenrohr 12 gebildet ist. Das Trennrohr 16 verjüngt sich oberhalb des oberen Endes des Steigrohrs 14 zu einem Schaumauslaß 30, der in einen geschlossenen Auffangbehälter 32 ragt.

Ein Zuleitungsrohr 34 mündet ungefähr auf halber Höhe zwischen dem Boden und dem Außenrand der Trennwand 20 tangential, wie in FIG. 2 gezeigt ist, in den Reaktionsraum 18. Das Zuleitungsrohr 34 ist mit der Druckseite einer Pumpe 36 verbunden, deren Saugseite mit einem Zulauf 38 für Arbeitsflüssigkeit, einem Zulauf 40 für Vorlaufflüssigkeit und einer Rückführung 42 verbunden ist, die jeweils mit einem Ventil 44, 46, 48 versehen sind.

Der Flotationsreaktor weist zudem drei Injektoren 50, 52, 54 auf, die jeweils der vorbeiströmenden Flüssigkeit ein in Zusammensetzung und Menge regelbares Luft-Ozon-Gemisch feinstblasig zumischen. Der erste Injektor 50 mündet zwischen der Pumpe 36 und dem Reaktionsraum 18 in das Zuleitungsrohr 34, der zweite Injektor 52 in den Zulauf 38 für die Arbeitsflüssigkeit und der dritte Injektor 54 in die Rückführung 42.

Ein Ablauf 56 für die gereinigte Flüssigkeit mündet unterhalb des oberen Endes des Steigrohrs 14 durch das Außenrohr 12 in den Außenkanal 28 und ist mit einem Aktivkohlefilter 58 verbunden. Außerdem mündet die Rückführung 42 zwischen dem Ablauf 56 und dem Entspannungskonus 26 durch das Außenrohr 12 in den Außenkanal 28.

Ein Abluftrohr 60 mündet oben in den Auffangbehälter 32 und ist mit einem weiteren Aktivkohlefilter 62 verbunden. Ein Ablauf 64 für das aus der Arbeitsflüssigkeit abgetrennte Flotat mündet unten in den Auffangbehälter 32.

Das erfindungsgemäße Verfahren wird im folgenden anhand des Betriebs des zuvor beschriebenen Flotationsreaktors beschrieben. Als Anwendungsbeispiel dient dabei die Wasseraufbereitung bei der Tierhaltung im Meerwasserbereich, beispielsweise in einem Meerwasseraquarium. Das aus dem Aquarium stammende Wasser ist stark nitrathaltig und wird daher in Reaktoren auf bekannte Weise mit Hilfe von Bakterien unter anoxischen Bedingungen denitrifiziert, die das Nitrat zu molekularem Stickstoff reduzieren. Bei diesem Vorgang vermehren sich die Bakterien sehr stark. Das die Reaktoren verlassende Wasser ist dann zwar in Hinblick auf den Nitratgehalt gereinigt, weist aber einen großen Anteil an Biomasse, nämlich den Bakterien auf, es können aber auch Algen vorhanden sein.

Die Biomasse muß vor einer Rückleitung des Wassers in das Aquarium entfernt werden, da sie für die im Aquarium gehaltenen Tiere eine Belastung darstellt. Sie führt nämlich zu einer Sauerstoffzehrung, da zum einen die noch lebenden Mikroben Sauerstoff verbrauchen, da aber auch zum anderen die Zersetzung der abgetöteten Mikroben, die Nahrung für andere Lebewesen darstellen, Sauerstoff erfordert. Zu diesem Zweck wird das denitrifizierte, mit Biomasse belastete Wasser durch einen, bevorzugt aber den zuvor beschriebenen Flotationsreaktor geleitet.

Bevor aber das eigentlich zu reinigende Wasser, das hier als Arbeitsflüssigkeit bezeichnet wird, in den Flotationsreaktor geleitet wird, muß erst in einer geeigneten Vorlaufflüssigkeit, die im vorliegenden Fall bevorzugt Meerwasser mit möglichst geringem Biomassegehalt ist, ein ausreichend hohes Redoxpotential eingestellt werden. Zu diesem Zweck werden die Ventile 44, 48 in dem Zulauf 38 für die Arbeitsflüssigkeit und in der Rückführung 42 geschlossen, das Ventil 46 in dem Zulauf 40 für die Vorlaufflüssigkeit hingegen geöffnet. Dann wird die Pumpe 36 eingeschaltet, so daß die Vorlaufflüssigkeit durch das Zuleitungsrohr 34 am ersten Injektor 50 vorbeigedrückt wird. Die so mit Ozon angereicherte Vorlaufflüssigkeit strömt weiter in den Reaktionsraum 18 und füllt den Reaktorbehälter 10, indem sie im Steigrohr 14 aufsteigt, bis sie über dessen oberen Rand fließt und den Innenkanal 24 und den Außenkanal 28 füllt.

Sobald der Wasserpegel im Außenkanal 28 die Höhe der Rückführung 42 erreicht, wird das Ventil 48 in der Rückführung 42 geöffnet und das Ventil 46 im Zulauf 40 für die Vorlaufflüssigkeit geschlossen. Die Vorlaufflüssigkeit kann nun solange im Kreislauf durch den Reaktorbehälter 10 geführt werden, bis zumindest im Reaktionsraum 18 ein Redoxpotential von über +850 mV erreicht ist. Zu diesem Zweck können die Zusammensetzung und Menge des Luft-Ozon-Gemischs am ersten und/oder dritten Injektor 50, 54 und die Pumpenleistung nach Bedarf geändert werden.

Als nächstes erfolgt die Einleitung der Arbeitsflüssigkeit in den Reaktorbehälter 10. Zu diesem Zweck wird das Ventil 44 im Zulauf 38 für die Arbeitsflüssigkeit geöffnet, so daß die Pumpe 36 ein Gemisch aus Arbeitsflüssigkeit und der bereits mit Ozon angereicherten Vorlaufflüssigkeit aus der Rückführung 42 fördert. Dabei können die Ozongehalte in der Arbeitsflüssigkeit, in der Vorlaufflüssigkeit und in dem Flüssigkeitsgemisch jeweils mit Hilfe des zweiten, des dritten und des ersten Injektors 52, 54, 50 nach Bedarf unabhängig voneinander eingestellt werden.

Da die derart mit dem Luft-Ozon-Gemisch angereicherte Flüssigkeit tangential in den Reaktionsraum 18 eingeleitet wird, wird dort ein Flüssigkeitswirbel erzeugt, so daß in der Flüssigkeit enthaltene Feststoffe, wie zum Beispiel Sandkörner, Kot, Pflanzenfasern und Futterreste, durch die Fliehkraft nach außen an das Außenrohr 12 gedrängt werden. Die Feststoffe wandern von dort in Spiralbahnen entlang der Unterseite der kegelstumpfförmigen Trennwand 20 bis in einen Bereich 66, der sich direkt oberhalb der zentralen Öffnung der Trennwand 20 befindet und die Spitze eines an die Stelle der Trennwand 20 gedachten Kegels umfaßt. In diesem Bereich 66 bildet sich eine stabile Schaumsäule, da sich Biomasse, die aus der Arbeitsflüssigkeit stammt und somit auch in dem Flüssigkeitsgemisch enthalten ist, an die Gasbläschen anlagert. Die dort ankommenden Feststoffteilchen lagern sich an diese Schaumsäule an.

Die mit Feststoffen und Biomasse beladene Schaumsäule steigt aufgrund des Auftriebs und der aufwärts gerichteten Flüssigkeitsströmung zusammen mit nicht oder nur wenig mit Biomasse beladenen Gasbläschen in das Steigrohr 14 hinein und passiert den durch die Zwischenwand 22 in zwei Hälften mit halbmondförmigen Querschnitt unterteilten Abschnitt. Die Zwischenwand 22 sorgt dafür, daß die im Reaktionsraum 18 gebildete rotierende Strömung im unteren Teil des Steigrohrs 14 in eine im wesentlichen linear im Steigrohr 14 aufsteigende Strömung übergeht. Beim Aufstieg im Steigrohr 14 bildet sich die Schaumsäule durch die fortgesetzte Anlagerung von Biomasse weiter aus.

Die aufsteigende Flüssigkeit gelangt schließlich zum oberen Ende des Steigrohrs 14 und von dort in den sich verjüngenden Abschnitt des Trennrohrs 16. Dort erfolgt die Trennung der Flüssigkeit von der mit aufgestiegenen Schaumsäule, da die Flüssigkeit über den Rand des Steigrohrs 14 in den Innenkanal 24 hinabfließt, die Schaumsäule hingegen von den nachfolgenden Gasblasen hinauf in den Schaumauslaß 30 und weiter in den Auffangbehälter 32 gedrückt wird.

Die nicht oder nur wenig mit Biomasse beladenen Gasbläschen, die nicht von der Schaumsäule festgehalten werden, werden durch die abwärts fließende Flüssigkeit in den Innenkanal 24 mit hinabgerissen. Im Entspannungskonus 26 verlangsamt sich die Flüssigkeitsströmung aufgrund des zunehmenden Strömungsquerschnitts soweit, bis der Auftrieb der Gasbläschen ausreicht, um diese entgegen der Flüssigkeitsströmung wieder im Innenkanal 24 aufsteigen zu lassen.

Die nun blasenfreie Flüssigkeit strömt um den Rand des Trennrohrs 16 in den Außenkanal 28 und darin aufwärts. Durch die Rückführung 42 wird ein Teil der Flüssigkeit abgezweigt und der noch nicht behandelten Arbeitsflüssigkeit zugeführt, um noch in der Flüssigkeit verbliebene Biomasse erneut durch den Reaktorbehälter 10 leiten zu können. Dieser Teil kann durch das Ventil 48 in der Rückführung 42 mengenmäßig geregelt werden. Mit Hilfe der Rückführung 42 wird die Verweilzeit der Biomasse im Reaktorbehälter 10 erhöht, so daß die Biomasse länger dem hohen Redoxpotential unterliegt als bei einer linearen Beschickung.

Die Injektoren 50, 52, 54 werden bei der Aufarbeitung der Arbeitsflüssigkeit so geregelt, daß das Redoxpotential zumindest im Reaktionsraum 18 bei ungefähr +800 mV liegt. Da das Ozon in der Arbeitsflüssigkeit wegen des hohen Gehalts an Biomasse schneller zersetzt wird als in der Vorlaufflüssigkeit, wurde das Redoxpotential in der Vorlaufflüssigkeit auf einen etwas höheren Wert eingestellt, so daß bei der Einleitung der Arbeitsflüssigkeit das Redoxpotential nicht auf einen zu tiefen Wert absinkt, von dem aus der gewünschte Wert von ungefähr +800 mV in der Arbeitsflüssigkeit nicht mehr durch eine erhöhte Ozonzufuhr zu erreichen ist.

Der nicht durch die Rückführung 42 gehende Teil der gereinigten Flüssigkeit strömt weiter bis zum Ablauf 56 und weiter zu dem Aktivkohlefilter 58, in dem das noch in der Flüssigkeit vorhandene Ozon katalytisch zerstört wird. Von dort wird die Flüssigkeit schließlich dem zu reinigenden System, hier also dem Meerwasseraquarium wieder zugeleitet.

Der im Auffangbehälter 32 gesammelte Schaum, auch Flotat genannt wird durch den Ablauf 64 abgeführt und kann entsorgt werden. Das im Auffangbehälter 32 durch platzende Gasbläschen freigegebene Ozon wird über das Abluftrohr 60 dem zweiten Aktivkohlefilter 62 zugeführt und dort katalytisch zerstört.

## Patentansprüche

1. Verfahren zum Entfernen von Biomasse aus einer Flüssigkeit mit Hilfe eines Reaktors (10), mit den Schritten, daß:
- in der eigentlich aufzubereitenden Arbeitsflüssigkeit (38) zumindest in einem örtlich begrenzten Bereich (18) ein Redoxpotential eingestellt wird, das einen bestimmten Betriebswert nicht unterschreitet; und
- die Arbeitsflüssigkeit durch Flotation gereinigt wird.
**gekennzeichnet** durch die Schritte, daß:
- eine Vorlaufflüssigkeit (40) in den Reaktor (10) geleitet wird, die einen geringeren Gehalt an Biomasse aufweist als die Arbeitsflüssigkeit;
- in der Vorlaufflüssigkeit zumindest in einem örtlich begrenzten Bereich (18) ein Redoxpotential eingestellt wird, das einen bestimmten Vorlaufwert nicht unterschreitet; und
- die Arbeitsflüssigkeit nach dem Einstellen des Redoxpotentials zu der Vorlaufflüssigkeit in den Reaktor (10) geleitet wird (34),
wobei:
- der Vorlaufwert mindestens so hoch wie der Betriebswert ist;
- der Betriebswert so hoch ist, daß Zellen von Bakterien, Algen oder dergleichen, die in der Arbeitsflüssigkeit enthalten sind, derart geschädigt werden, daß sie flotierbar sind; und
- das Redoxpotential durch Zufuhr von Ozon (50,52,54) eingestellt wird.

2. Verfahren nach Anspruch 1, dadurch **gekennzeichnet,** daß der Betriebswert so hoch ist, daß die Zellen derart geschädigt werden, daß das Zellplasma austritt.

3. Verfahren nach Anspruch 1 oder 2, dadurch **gekennzeichnet**, daß der Vorlaufwert mindestens +650 mV beträgt.

4. Verfahren nach Anspruch 3, dadurch **gekennzeichnet**, daß der Vorlaufwert zwischen +750 und +850 mV liegt.

5. Verfahren nach einem der vorhergehenden Ansprüche, dadurch **gekennzeichnet**, daß der Betriebswert mindestens +650 mV beträgt.

6. Verfahren nach Anspruch 5, dadurch **gekennzeichnet**, daß der Betriebswert zwischen +750 und +850 mV liegt.

7. Verfahren nach einem der vorhergehenden Ansprüche, dadurch **gekennzeichnet**, daß eine Ozonzufuhr im Reaktorbehälter (10) erfolgt.

8. Verfahren nach einem der vorhergehenden Ansprüche, dadurch **gekennzeichnet**, daß eine Ozonzufuhr erfolgt (50,52,54), bevor die Flüssigkeit in den Reaktorbehälter (10) geleitet wird.

9. Verfahren nach einem der vorhergehenden Ansprüche, dadurch **gekennzeichnet**, daß ein Teil der gereinigten Flüssigkeit in den Reaktorbehälter (10) zurückgeführt wird (42, 48).

10. Verfahren nach Anspruch 9, dadurch **gekennzeichnet,** daß eine Ozonzufuhr (54) in die zurückgeführte Flüssigkeit erfolgt (42, 48).

11. Verfahren nach einem der vorhergehenden Ansprüche, dadurch **gekennzeichnet,** daß der örtlich begrenzte Bereich im Einleitungsbereich (18) der Flüssigkeit in den Reaktorbehälter (10) liegt.

12. Verfahren nach einem der vorhergehenden Ansprüche, dadurch **gekennzeichnet**, daß die Flotation durch Flockungsmittel unterstützt wird, die der Arbeitsflüssigkeit (38) zugesetzt werden.

13. Verfahren nach einem der vorhergehenden Ansprüche, dadurch **gekennzeichnet**, daß die Flotation durch ein elektrisches Feld unterstützt wird, das in dem Reaktorbehälter (10) erzeugt wird.

14. Verfahren nach einem der vorhergehenden Ansprüche, dadurch **gekennzeichnet;** daß der Arbeitsflüssigkeit (38) eine die Oberflächenspannung verringernde Substanz zugesetzt wird.

15. Verfahren nach einem der vorhergehenden Ansprüche, dadurch **gekennzeichnet,** daß die gereinigte Flüssigkeit (56) nach dem Ablauf aus dem Reaktorbehälter (10) durch einen Aktivkohlefilter (58) geleitet wird.

## Claims

1. Method for removing biomass from a liquid by means of a reactor (10), with the steps that:
- in the working liquid (38) to be really treated, a redox potential which is not falling below a given operation value is adjusted at least in a locally limited region (18); and
- the working liquid is cleaned by flotation,
**characterized** by the steps that:
- a preliminary liquid (40) which has a lower biomass content than the working liquid, is fed into the reactor (10);
- in the preliminary liquid, a redox potential which is not falling below a given preliminary value is adjusted at least in a locally limited region (18); and
- the working liquid is fed (34) to the preliminary liquid into the reactor (10) after the adjustment of the redox potential,
whereas:
- the preliminary value is at least as high as the operation value;
- the operation value is so high that cells of from bacteria, algae or the like which are contained in the working liquid, are damaged in such a manner that they are floatable; and
- the redox potential is adjusted by the supply of ozone (50, 52, 54).

2. Method according to claim 1, **characterized** in that the operation value is so high that the cells are damaged in such a manner that the cell plasma comes out.

3. Method according to claim 1 or 2, **characterized** in that the preliminary value is at least +650 mV.

4. Method according to claim 3, **characterized** in that the preliminary value is between +750 and +850 mV.

5. Method according to one of the preceding claims, **characterized** in that the operation value is at least +650 mV.

6. Method according to claim 5, **characterized** in that the operation value is between +750 and +850 mV.

7. Method according to one of the preceding claims, **characterized** in that a supply of ozone is carried out in the reactor vessel (10).

8. Method according to one of the preceding claims, **characterized** in that a supply of ozone (50, 52, 54) is carried out before the liquid is fed into the reactor vessel (10).

9. Method according to one of the preceding claims, **characterized** in that a part of the cleaned liquid is fed back (42, 48) into the reactor vessel (10).

10. Method according to claim 9, **characterized** in that a supply of ozone (54) is carried out into the liquid which is fed back (42, 48).

11. Method according to one of the preceding claims, **characterized** in that the locally limited region is situated in the region (18) where the liquid is fed into the reactor vessel (10).

12. Method according to one of the preceding claims, **characterized** in that the flotation is supported by flocculating agents which are added to the working liquid (38).

13. Method according to one of the preceding claims, **characterized** in that the flotation is supported by an electric field which is generated in the reactor vessel (10).

14. Method according to one of the preceding claims, **characterized** in that a surface tension reducing substance is added to the working liquid (38).

15. Method according to one of the preceding claims, **characterized** in that the cleaned liquid (56), after the discharge from the reactor vessel (10), is led through an active carbon filter (58).

## Revendications

1. Procède d'élimination de la biomasse dans un liquide à l'aide d'un réacteur (10), avec les pas que:
- dans un liquide de travail (38) qui est à traiter en réalité, un potentiel redox qui ne tombe pas sous une valeur d'opération désignée, est ajusté au moins dans une région (18) limitée localement; et
- le liquide de travail est épuré par flottation,
**caractérisé** par les pas que:
- un liquide préliminaire (40) qui a un titre de la biomasse plus petit que le liquide de travail, est introduit dans le réacteur (10);
- dans le liquide préliminaire, un potentiel redox qui ne tombe sous une valeur préliminaire désignée, est ajusté au moins dans une région (18) limitée localement; et
- le liquide de travail est introduit (34) dans le liquide préliminaire dans le réacteur (10) après l'ajustement du potentiel redox,
à l'occasion de quoi:
- la valeur préliminaire est au moins si haute que la valeur d'opération;
- la valeur d'opération est si haute que des cellules de bactéries, d'algues ou semblables qui sont contenues dans le liquide de travail, sont endommagées de telle façon qu'elles sont flottables; et
- le potentiel redox est ajusté par la alimentation d'ozone (50, 52, 54).

2. Procède selon la revendication 1, **caractérisé** en ce que la valeur d'opération est si haute que les cellules sont endommagées de telle façon que le cytoplasme sort.

3. Procède selon la revendication 1 ou 2, **caractérisé** en ce que la valeur préliminaire est au moins +650 mV.

4. Procède selon la revendication 3, **caractérisé** en ce que la valeur préliminaire est entre +750 et +850 mV.

5. Procède selon l'une des revendications précédentes, **caractérisé** en ce que la valeur d'opération est au moins +650 mV.

6. Procède selon la revendication 5, **caractérisé** en ce que la valeur d'opération est entre +750 et +850 mV.

7. Procède selon l'une des revendications précédentes, **caractérisé** en ce que une alimentation d'ozone est effectuée dans le réservoir de réacteur (10).

8. Procède selon l'une des revendications précédentes, **caractérisé** en ce que une alimentation d'ozone (50, 52, 54) est effectuée avant que le liquide est introduit dans le réservoir de réacteur (10).

9. Procède selon l'une des revendications précédentes, **caractérisé** en ce que une part du liquide épuré est reconduite (42, 48) dans le réservoir de réacteur (10).

10. Procède selon la revendication 9, **caractérisé** en ce que une alimentation d'ozone (54) est effectuée dans le liquide reconduit (42, 48).

11. Procède selon l'une des revendications précédentes, **caractérisé** en ce que la région limitée localement est située dans la région (18) où le liquide est introduit dans le réservoir de réacteur (10).

12. Procède selon l'une des revendications précédentes, **caractérisé** en ce que la flottation est supportée par des floculants qui sont ajoutés au liquide de travail (38).

13. Procède selon l'une des revendications précédentes, **caractérisé** en ce que la flottation est supportée par un champ électrique qui est généré dans le réservoir de réacteur (10).

14. Procède selon l'une des revendications précédentes, **caractérisé** en ce que une substance réduisant la tension superficielle est ajoutée au liquide de travail (38).

15. Procède selon l'une des revendications précédentes, **caractérisé** en ce que le liquide épuré (56), après la décharge du réservoir de réacteur (10), est conduit à travers un filtre au charbon actif (58).
